# EUROPEAN PATENT APPLICATION

(11) **EP 2 725 850 A2**
(43) Date of publication of application: **30.04.2014**
(21) Application number: 13171089.9
(22) Date of filing: 07.06.2013
(51) Int. Cl.: H04W 48/00

(54) **Electronic apparatus and control method of system**

(30) Priority: 25.10.2012 KR 20120119099
(71) Applicant: Samsung Electronics Co., Ltd, Gyeonggi-do 443-742 (KR)
(72) Inventor: Kwon, Jae-un, Seoul (KR)
(74) Representative: Taor, Simon Edward William

(57) **Abstract**

An electronic apparatus including: a communicator configured to wirelessly connect to an access point (AP) to enable wireless communication; a storage configured to store AP connection information for connection to the AP through the communicator; a reader configured to read a direct connection information code from an external device when the direct connection information code for direct wireless connection by the electronic apparatus to the external device is installed on the external device; and a controller configured to establish a direct wireless connection to the external device based on the direct connection information code read by the reader and transmit the AP connection information stored in the storage to the external device which is directly wirelessly connected so the external device connects to the AP based on the AP connection information.

## Description

Apparatuses and methods consistent with the exemplary embodiments relate to an electronic apparatus wirelessly connecting to an access point (AP) to enable wireless communication and a control method of a system, more particularly to an electronic apparatus having a configuration facilitating communication setup for connection to an AP and a control method of a system.

An electronic apparatus refers to any general device capable of performing various user desired functions. For example, various types and characteristics of electronic apparatuses, such as home appliances including a washing machine, a refrigerator and a dish washer, audio/video (A/V) devices including a set-top box, an optical media reproduction system and a television (TV), and mobile devices including a personal computer (PC), a mobile phone and a portable media player, are used at home to meet the demands of a user.

With technological advancement and growing user demands, such electronic apparatuses are upgraded to perform not only independent functions but various additional functions. For example, electronic apparatuses establish a network to perform data communication with each other, thereby enabling users to use various and complicated functions through interactions and communications between the electronic apparatuses and of the different functions. For instance, electronic apparatuses form a network system within a limited range, such as a home network, established by electronic apparatuses which are in a user's home.

However, a setup procedure for connection to a network may be complicated depending on an electronic apparatus. For example, a home appliance, such as a washing machine or an air conditioner, may not have a display to present a setup status or may present limited information even with a display. In this case, a user may be able to set up a network of the electronic apparatus by pressing manipulation buttons installed on the electronic apparatus a plurality of times or sequentially manipulating the buttons according to a particular sequence; however, this is inconvenient to a user.

The foregoing and/or other aspects may be achieved by providing an electronic apparatus including: a communicator configured to wirelessly connect to an access point (AP) to enable wireless communication; a storage configured to store AP connection information for connection to the AP through the communicator; a reader configured to read a direct connection information code from an external device when the direct connection information code for direct wireless connection by the electronic apparatus to the external device is installed on the external device; and a controller configured to establish a direct wireless connection to the external device based on the direct connection information code read by the reader and transmit the AP connection information stored in the storage to the external device which is directly wirelessly connected so the external device connects to the AP based on the AP connection information.

The direct connection information code may include a near field communication (NFC) tag on the external device, and the reader may detect the NFC tag when the external device is within a preset distance to the electronic apparatus.

The direct connection information code may include a quick response (QR) code on the external device, and the reader may include a camera to detect the QR code.

The AP connection information may include a service set identifier (SSID).

The direct connection information code may include a personal identification number (PIN) of the external device, and the controller may acquire the PIN to control the communicator to establish the direct wireless connection to the external device.

The direct wireless connection may include a peer-to-peer (P2P) connection based on a Wi-Fi standard.

The communicator may connect to the AP based on a Wi-Fi standard.

Another aspect of the exemplary embodiment may be achieved by providing a control method of a system for wirelessly connecting a second electronic apparatus to an access point (AP), the system including the AP, a first electronic apparatus wirelessly connected to the AP to communicate with the AP, and the second electronic apparatus is not wirelessly connected to the AP, the control method including: the first electronic apparatus reading a first connection information code from the second electronic apparatus when the first connection information code for direct wireless connection to the second electronic apparatus is installed in the second electronic apparatus; the first electronic apparatus establishing a direct wireless connection to the second electronic apparatus based on the first connection information code; the first electronic apparatus transmitting a second connection information code to the second electronic apparatus, wherein the second connection information code comprises information for the second electronic apparatus to wirelessly connect to the AP; and the second electronic apparatus wirelessly connecting to the AP based on the second connection information code received from the first electronic apparatus.

The first connection information code may include a near field communication (NFC) tag on the second electronic apparatus, and wherein the first electronic apparatus reading the first connection information code may include detecting the NFC tag when the second electronic apparatus is within a preset distance from the first electronic apparatus.

The first connection information code may include a quick response (QR) code on the second electronic apparatus, and wherein the first electronic apparatus reading the first connection information code may include detecting the QR code by a camera installed in the first electronic apparatus.

The AP connection information may include a service set identifier (SSID).

The first connection information code may include a personal identification number (PIN) of the second electronic apparatus, and wherein the first electronic apparatus establishing the direct wireless connection to the second electronic apparatus may include acquiring the PIN so the first electronic apparatus establishes the direct wireless connection to the second electronic apparatus.

The direct wireless connection may include a peer-to-peer (P2P) connection based on a Wi-Fi standard.

The first electronic apparatus may connect to the AP based on a Wi-Fi standard.

The above and/or other aspects will become apparent and more readily appreciated from the following description of the exemplary embodiments, taken in conjunction with the accompanying drawings, in which:
FIG. 1 is a block diagram illustrating a configuration of a system in a home network according to a first exemplary embodiment;
FIG. 2 is a flowchart illustrating a control method of a first electronic apparatus for wirelessly connecting a second electronic apparatus to an access point in the system of FIG. 1;
FIG. 3 is a block diagram illustrating a configuration of a system in a home network according to a second exemplary embodiment; and
FIG. 4 illustrates signal transmission in the system in a home network of FIG. 3.

Below, exemplary embodiments will be described in detail with reference to the accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

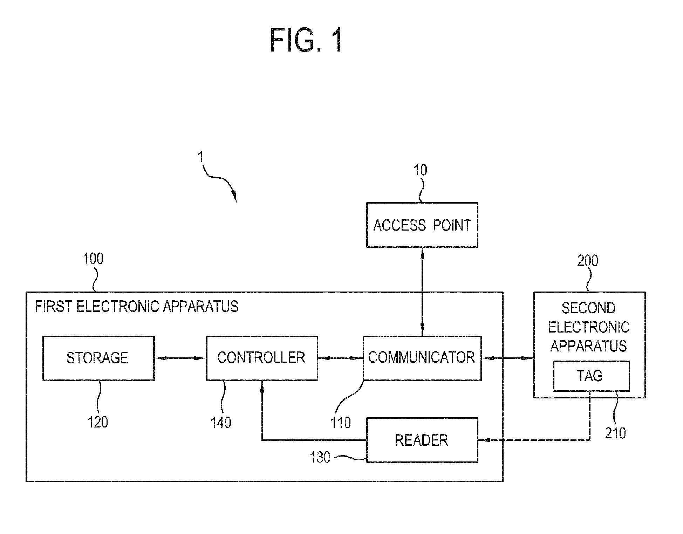

FIG. 1 is a block diagram illustrating a configuration of a system in a home network 1 according to a first exemplary embodiment.

As shown in FIG. 1, the system 1 according to the exemplary embodiment includes an access point (AP) 10 enabling a connection for wireless communication, and a first electronic apparatus 100 and a second electronic apparatus 200 which connect to the AP 10 to perform wireless communication. Although the exemplary embodiment shows that the system 1 includes one AP 10 and two electronic apparatuses, first electronic apparatus 100 and second electronic apparatus 200, the following exemplary embodiment may be also applied to a system 1 which includes at least two APs, such as access point 10, or at least three electronic apparatuses, such as first electronic apparatus 100 and second electronic apparatus 200.

The AP 10 is a device that allows the first electronic apparatus 100 and the second electronic apparatus 200 to connect to a wired network using wireless communication protocols, for example, Wi-Fi or Bluetooth. The AP 10 is connected to a router (not shown) connected to the wired network, thereby relaying communications between the first electronic apparatus 100 and the second electronic apparatus 200 wirelessly connected and any other electronic apparatus connected to the wired network. In the exemplary embodiment, the AP 10 provides wireless communication based on Wi-Fi to the first electronic apparatus 100 and the second electronic apparatus 200.

The first electronic apparatus 100 and the second electronic apparatus 200 may be any general electronic device, for example, home appliances including a washing machine, a refrigerator and a dish washer, audio/video devices including a set-top box, an optical media reproduction system and a television (TV), and mobile devices including a personal computer (PC), a mobile phone and a portable media player, without being limited to particular kinds and characteristics. However, the exemplary embodiment will be illustrated with a mobile device which is easily carried by a user, as the first electronic apparatus 100.

The first electronic apparatus 100 includes a communicator 110 connected to the AP 10 to conduct wireless communication, a storage 120 storing various types of data, a reader 130 detecting a tag 210 of the second electronic apparatus 200 to read information about the tag 210, and a controller 140 controlling general operations of the first electronic apparatus 100.

The communicator 110 connects to the AP 10 in accordance with an infrastructure mode of a Wi-Fi standard, thereby connecting the first electronic apparatus 100 to the network to enable two-way communication. Alternatively, the communicator 110 may connect to an external device one to one by a peer-to-peer (P2P) architecture in accordance with a Wi-Fi direct mode of the Wi-Fi standard, instead of via the AP 10.

The storage 120 is configured as a nonvolatile memory, such as a flash memory and a hard disk drive. The storage 120 is accessed by the controller 140, and the data stored in the storage 120 may be read, recorded, revised, deleted, or updated by the controller 140.

The reader 130 detects an information code from another apparatus, such as the second electronic apparatus 200, within a preset distance, and reads and transmits the information code to the controller 140. When the tag 210 based on near field communication (NFC) is detected, the reader 130 interprets and reads information or data included in the tag 210. The NFC tag can contain data which is read-only or may be rewriteable. The NFC tag can store various kinds of information for providing data from one device to another device.

NFC is a set of short-range wireless technologies for mobile equipment or a personal computer (PC). NFC is a noncontact local area wireless communication technology which enables data transmission using a frequency of 13.56 MHz and low power within a distance of 10 cm or less. That is, the reader 130 may detect the tag 210 as the user leads the first electronic apparatus 100 close to the tag 210 of the second electronic apparatus 200. Here, the tag 210 includes an NFC-based information code readable by the reader 130.

In the system 1 having this configuration, if the first electronic apparatus 100 is wirelessly connected to the AP 10, while the second electronic apparatus 200 is not wirelessly connected to the AP 10, the user may manipulate a user interface (not shown) of the second electronic apparatus 200, thereby connecting the second electronic apparatus 200 wirelessly to the AP 10.

However, such manipulation by the user, although not impossible, may be complicated and inconvenient depending on the kind and the model of the second electronic apparatus 200. Thus, the exemplary embodiment suggests the following method in order to readily achieve a process of wirelessly connecting the second electronic apparatus 200 to the AP 10.

The tag 210 of the second electronic apparatus 200 includes a direct connection information code for a device to establish direct wireless connection to the second electronic apparatus 200. Direct wireless connection conforms to the Wi-Fi direct mode of the Wi-Fi standard. Meanwhile, the storage 120 of the first electronic apparatus 100 stores AP connection information for connection to the AP 10.

When the direct connection information code of the tag 210 is read by the reader 130, the controller 140 of the first electronic apparatus 100 establishes direct wireless connection to the second electronic apparatus 200 based on the read direct connection information. In the exemplary embodiment, when the first electronic apparatus 100 establishes direct wireless connection to the second electronic apparatus 200, there is no intervening device to establish the connection. The controller 140 transmits the AP connection information stored in the storage 120 to the second electronic apparatus 200, which is connected directly and wirelessly to the first electronic apparatus 100.

Accordingly, the second electronic apparatus 200 may wirelessly connect to the AP 10 based on the AP connection information received from the first electronic apparatus 100.

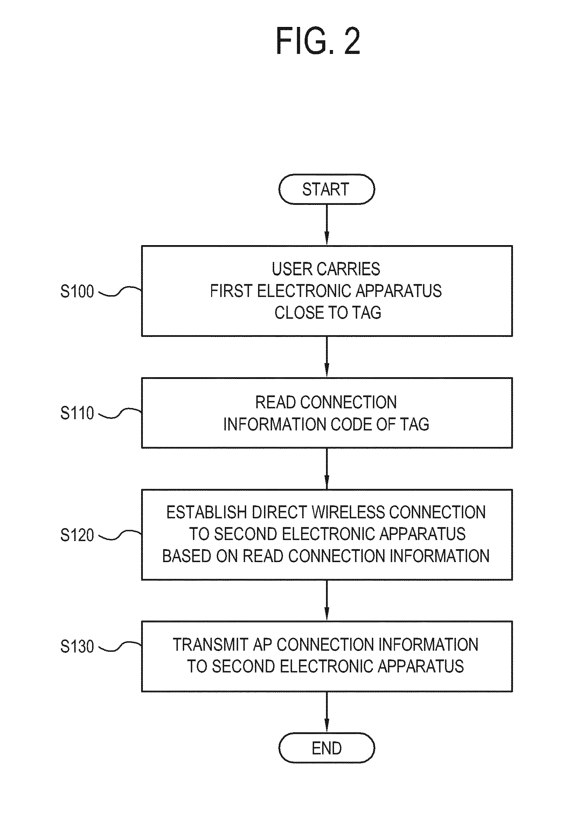

Hereinafter, a method of wirelessly connecting the second electronic apparatus 200 to the AP 10 in the system 1 will be described with reference to FIG. 2.

FIG. 2 is a flowchart illustrating a control method of the first electronic apparatus 100 for wirelessly connecting the second electronic apparatus 200 to the AP 10. Here, in an initial state, the first electronic apparatus 100 is wirelessly connected to the AP 10, while the second electronic apparatus 200 is not wirelessly connected to the AP 10.

As shown in FIG. 2, the user carries the first electronic apparatus 100 close to the tag 210 of the second electronic apparatus 200 (S100). Accordingly, the first electronic apparatus 100 reads the connection information code of the tag 210 (S110).

The connection information code of the tag 210 includes a device name of the second electronic apparatus 200, a personal identification number (PIN) of the second electronic apparatus 200 for direct wireless connection to the second electronic apparatus 200, and a request message for information about the AP 10.

The first electronic apparatus 100 establishes a direct wireless connection to the second electronic apparatus 200 based on the read connection information (S120). Particularly, since the PIN specifies the second electronic apparatus 200 in the Wi-Fi direct connection mode, the first electronic apparatus 100 may connect to the second electronic apparatus 200 based on the PIN of the read connection information.

For example, in order to conduct direct wireless connection between a first device and a second device which are capable of performing wireless communication based on Wi-Fi, the user inputs a prepared PIN of the second device into the first device, thereby achieving direct wireless connection between the first device and the second device.

According to the exemplary embodiment, however, the PIN of the second electronic apparatus 200 is configured as the NFC tag 210 to be installed outside of the second electronic apparatus 200, and the first electronic apparatus 100 reads the PIN of the NFC tag 210, thereby easily realizing direct wireless connection between the first electronic apparatus 100 and the second electronic apparatus 200. For example, the NFC tag 210 can be placed in an external surface of the second electronic apparatus 200.

When the direct wireless connection to the second electronic apparatus 200 is established, the first electronic apparatus 100 transmits the AP connection information stored therein to the second electronic apparatus 200 (S130). The AP connection information is information needed for connection to the AP 10, and the first electronic apparatus 100, which is connected to the AP 10, stores the information needed for connection to the AP 10.

The AP connection information includes, for example, a service set identifier (SSID) and a password for authentication in order to connect to the AP 10. An SSID is a unique identifier existing in a header of any data packet transmitted via a wireless network, which is used to distinguish one wireless network from another wireless network when a client in the network connects to a basic service set (BSS) as a basic block of a wireless network. That is, an AP and a client use the same SSID to connect to a particular wireless network.

As the first electronic apparatus 100 transmits the SSID to the second electronic apparatus 200, the second electronic apparatus 200 connects to the AP 10, to which the first electronic apparatus 100 is connected, based on the SSID. When the AP connection information is received from the first electronic apparatus 100, the second electronic apparatus 200 reboots the system and wirelessly connects to the AP 10 based on the AP connection information during rebooting.

When the first electronic apparatus 100 transmits the AP connection information to the second electronic apparatus 200, the first electronic apparatus 100 may also transmit a control code to instruct the second electronic apparatus 200 to conduct a scan for connection to the AP 10. Accordingly, the second electronic apparatus 200 performs the corresponding operation in accordance with the control code.

According to this process, the second electronic apparatus 200 may wirelessly connect to the AP 10.

In the exemplary embodiment described above, the tag 210 is configured in accordance with NFC and the reader 130 reads the NFC tag 210. However, the tag 210 may include a quick response (QR) code or bar code, without being limited to the foregoing example. In this case, the reader 130 includes a camera (not shown) to take or pick up an image of the code of the tag 210 and to interpret the code.

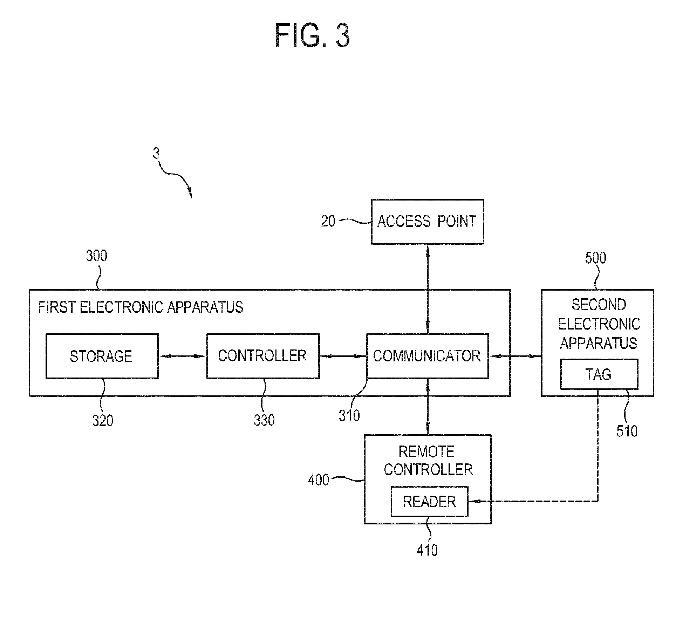

Also, in the aforementioned exemplary embodiment, the first electronic apparatus 100 is a mobile device easily carried by the user. However, the first electronic apparatus 100 may be a device which is not portable, for example, a TV, which will be described with reference to FIG. 3.

FIG. 3 is a block diagram illustrating a configuration of a system 3 according to a second exemplary embodiment.

As shown in FIG. 3, the system 3 according to the exemplary embodiment includes an AP 20, and a first electronic apparatus 300 and a second electronic apparatus 500 which are connected to the AP 20 to perform wireless communication.

The AP 20, the second electronic apparatus 500, and a tag 510 of the second electronic apparatus 500 are substantially the same as those described above in the first exemplary embodiment, and thus descriptions thereof will be omitted herein. [0001] The first electronic apparatus 300 includes a communicator 310, a storage 320, and a controller 330. Further, the first electronic apparatus 300 provides a manipulation interface for the user to direct various operations of the first electronic apparatus 300 and includes a remote controller 400 separated from the first electronic apparatus 300. The communicator 310 of the first electronic apparatus 300 receives a control signal from the remote controller 400 and transmits the control signal to the controller 330. A reader 410 which reads the tag 510 is included in the remote controller 400, instead of a main body of the first electronic apparatus 300.

That is, the exemplary embodiment is different from the first exemplary embodiment in that the first electronic apparatus 300 includes the separate remote controller 400, which includes the reader 410.

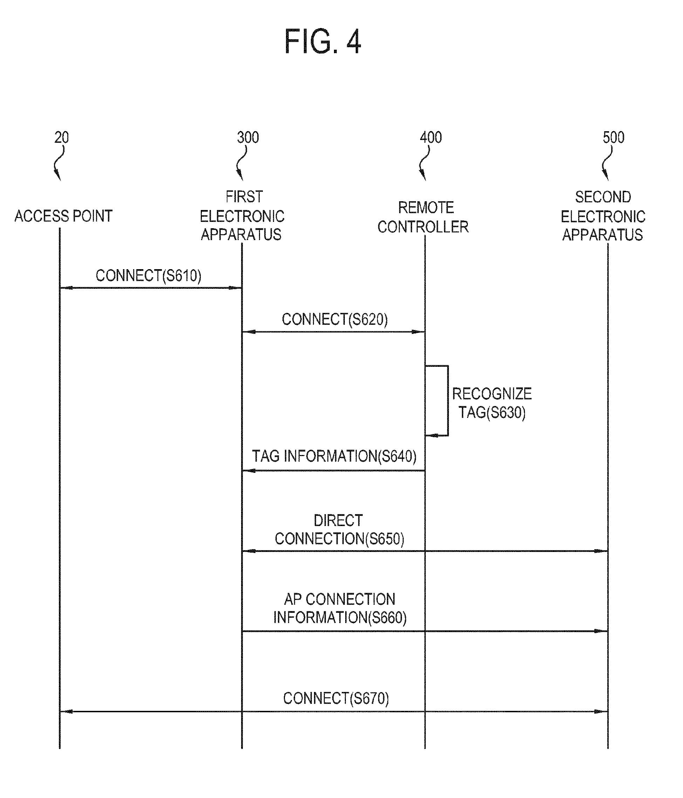

Hereinafter, a method of wirelessly connecting the second electronic apparatus 500 to the AP 20 in the system 3 will be described with reference to FIG. 4.

FIG. 4 illustrates signal transmission in the system 3.

As shown in FIG. 4, the first electronic apparatus 300 wirelessly connects to the AP 20 for communication (S610). In the meantime, the first electronic apparatus 300 is wirelessly connected with the remote controller 400 for communication (S620). Here, when the first electronic apparatus 300 is wirelessly connected to the AP 20 in accordance with a Wi-Fi protocol, the remote controller 400 may be wirelessly connected to the first electronic apparatus 300 in a different protocol, for example, Bluetooth. Accordingly, the remote controller 400 may transmit a control signal based on user manipulation to the first electronic apparatus 300, and the first electronic apparatus 300 performs an operation corresponding to the control signal.

In this state, when the user carries the remote controller 400 close to the tag 510 of the second electronic apparatus 500, the remote controller 400 acquires information included in the tag 510 (S630). The remote controller 400 transmits the information included in the tag 510, that is, information for direct connection to the second electronic apparatus 500, to the first electronic apparatus 300 (S640).

The first electronic apparatus 300 establishes direct wireless connection to the second electronic apparatus 500 based on the information received from the remote controller 400 (S650). Then, the first electronic apparatus 300 transmits AP connection information for connection to the AP 20 to the second electronic apparatus 500 (S660).

The second electronic apparatus 500 connects to the AP 20 based on the AP connection information received from the first electronic apparatus 300 (S670).

According to this process, the exemplary embodiment may ease wireless connection of the second electronic apparatus 500 to the AP 20 in the system 3.

Although a few exemplary embodiments have been shown and described, it will be appreciated by those skilled in the art that changes may be made in these exemplary embodiments without departing from the principles of the inventive concept, the scope of which is defined in the appended claims and their equivalents.

## Claims

1. An electronic apparatus comprising:
a communicator arranged to be wirelessly connected to an access point (AP) to enable wireless communication;
a storage arranged to store AP connection information for connection to the AP through the communicator;
a reader arranged to read a direct connection information code from an external device when the direct connection information code for direct wireless connection by the electronic apparatus to the external device is installed on the external device; and
a controller arranged to establish a direct wireless connection to the external device based on the direct connection information code read by the reader and to transmit the AP connection information stored in the storage to the external device which is directly wirelessly connected so the external device not wirelessly connected to the AP connects to the AP based on the AP connection information.

2. The electronic apparatus of claim 1, wherein the direct connection information code comprises a near field communication (NFC) tag on the external device, and the reader is arranged to detect the NFC tag when the external device is within a preset distance.

3. The electronic apparatus of claim 1 or 2, wherein the direct connection information code comprises a quick response (QR) code on the external device, and the reader comprises a camera arranged to detect the QR code.

4. The electronic apparatus of any one of claims 1 to 3, wherein the AP connection information comprises a service set identifier (SSID).

5. The electronic apparatus of any one of claims 1 to 4, wherein the direct connection information code comprises a personal identification number (PIN) of the external device, and the controller is arranged to acquire the PIN to control the communicator to establish the direct wireless connection to the external device.

6. The electronic apparatus of any one of claims 1 to 5, wherein the direct wireless connection comprises a peer-to-peer (P2P) connection based on a Wi-Fi standard.

7. The electronic apparatus of any one of claims 1 to 6, wherein the communicator is arranged to connect to the AP based on a Wi-Fi standard.

8. A control method of a system for wirelessly connecting a second electronic apparatus to an access point (AP), the system comprising the AP, a first electronic apparatus wirelessly connected to the AP to communicate with the AP, and the second electronic apparatus not wirelessly connected to the AP, the control method comprising:
the first electronic apparatus reading a first connection information code from the second electronic apparatus when the first connection information code for direct wireless connection to the second electronic apparatus is installed in the second electronic apparatus;
the first electronic apparatus establishing a direct wireless connection to the second electronic apparatus based on the first connection information code;
the first electronic apparatus transmitting a second connection information code to the second electronic apparatus, wherein the second connection information code comprises information for the second electronic apparatus to wirelessly connect to the AP; and
the second electronic apparatus wirelessly connecting to the AP based on the second connection information code received from the first electronic apparatus.

9. The control method of claim 8, wherein the first connection information code comprises a near field communication (NFC) tag on the second electronic apparatus, and wherein the first electronic apparatus reading the first connection information code comprises detecting the NFC tag when the second electronic apparatus is within a preset distance from the first electronic apparatus.

10. The control method of claim 8 or 9, wherein the first connection information code comprises a quick response (QR) code on the second electronic apparatus, and wherein the first electronic apparatus reading the first connection information code comprises detecting the QR code by a camera installed in the first electronic apparatus.

11. The control method of any one of claims 8 to 10, wherein the AP connection information comprises a service set identifier (SSID).

12. The control method of any one of claims 8 to 11, wherein the first connection information code comprises a personal identification number (PIN) of the second electronic apparatus, and wherein the first electronic apparatus establishing the direct wireless connection to the second electronic apparatus comprises acquiring the PIN so the first electronic apparatus establishes the direct wireless connection to the second electronic apparatus.

13. The control method of any one of claims 8 to 12, wherein the direct wireless connection comprises a peer-to-peer (P2P) connection based on a Wi-Fi standard.

14. The control method of any one of claims 8 to 13, wherein the first electronic apparatus connects to the AP based on a Wi-Fi standard.
